Europäisches Patentamt

European Patent Office

Office européen des brevets

⑩

(11) Publication number: **0 176 000**

**B1**

(12) **EUROPEAN PATENT SPECIFICATION**

(45) Date of publication of patent specification: **23.11.88**

(21) Application number: **85111435.5**

(22) Date of filing: **10.09.85**

(51) Int. Cl.⁴: **B 65 B 61/20**

(54) **Apparatus for affixing auxiliary articles to commodities.**

(30) Priority: **10.09.84 JP 190450/84**

(43) Date of publication of application:
**02.04.86 Bulletin 86/14**

(45) Publication of the grant of the patent:
**23.11.88 Bulletin 88/47**

(84) Designated Contracting States:
**BE CH DE FR GB IT LI NL SE**

(56) References cited:
**EP-A-0 085 895**
**EP-A-0 117 920**
**FR-A-2 415 576**

(73) Proprietor: **AB TETRA PAK**
**Box 61**
**S-221 00 Lund (SE)**

(72) Inventor: **Kaneko, Yutaka**
**9-2, Nishikoujiya 1-Chome**
**Ota-Ku Tokyo (JP)**

(74) Representative: **Glawe, Delfs, Moll & Partner**
**Patentanwälte**
**Postfach 26 01 62 Liebherrstrasse 20**
**D-8000 München 26 (DE)**

EP 0 176 000 B1

Courier Press, Leamington Spa, England.

## Description

The present invention relates to an apparatus for affixing auxiliary articles according to the preamble part of claim 1.

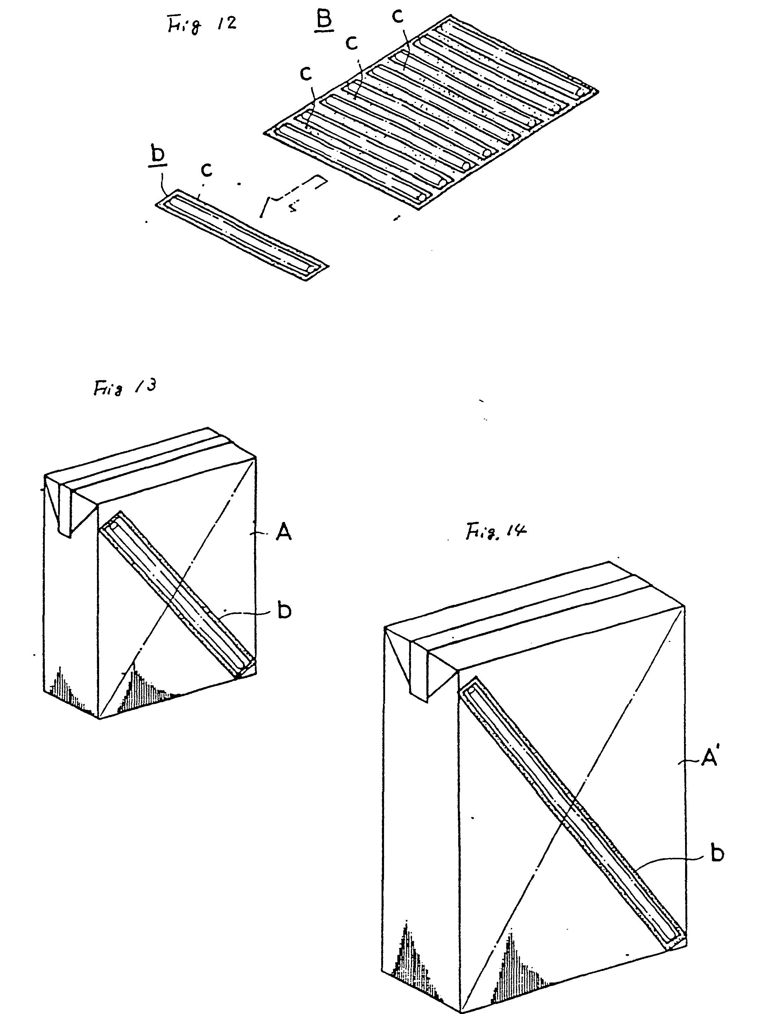

It is already known to provide drinking containers, such as milk or juice containers, with auxiliary articles, such as straws sealed in paper, as it is shown in fig. 13 and 14 for two containers A and A' of different height. As it is shown in fig. 12, first of all the sealed drinking straws b have to be cut from a continuous strip B along spaces c. Afterwards they are applied to an external side face of container A or A', along the diagonal line of the side face. It is therefore necessary to provide devices for applying glue and the auxiliary article in an inclined position relative to the edges of the containers. When the dimensions of the package containers are changed, it is also necessary to change the angular position of the auxiliary article, and therefore the devices have to be adjustable with respect to this position.

A device according to the preamble part of claim 1 is disclosed in EP—A—O 085 895. For changing the angular position for fixing auxiliary articles to commodities the device can be tilted about an axis which is intersecting the support frame below the device. Therefore, when the device is pivoting about the axis, not only the angular position of the auxiliary articles but also the vertical and horizontal positions are changed. Consequently, it is necessary to shift and adjust the whole device in horizontal and vertical directions in order to reach the proper position with respect to the conveyor, sensors or the glue application device.

It is therefore an object of the invention to provide an apparatus according to the preamble part of claim 1 which has a more simple construction and which needs no complicated manipulations or adjustments for changing the angular position of the auxiliary articles.

This object is achieved by an apparatus having the features of the characterizing clause of claim 1. The dependent claims are related to further developments of the invention.

According to the invention the pivoting axis is correlated with the center of the auxiliary article to be fixed and consequently with the center of the side face of the commodities. Therefore, a variation of the angular position does not affect the horizontal or vertical position of the device. It is only necessary to shift the affixing device in vertical direction, when the height of the commodities is changed. There are no means required for shifting the device in horizontal direction, even if the width of the commodities is changed. The horizontal position is fixed with respect to other components as the glue application device, the conveyor and the same, so that the whole device can be provided a stationary unit. Therefore, the device according to the present invention has a more simple construction and no complicated manipulations are necessary for changing the angular position. The adjustment in the vertical direction can be made in an easy way as it is directly related to the height of the commodities without any influence arising from the adjustment of the angular position.

The same considerations apply for the case of adhering auxiliary articles such as spoons to the side face this of food packaging containers containing yogurt or ice-cream.

In an embodiment of the invention the support comprises a bracket having an arcuate guide face concentric to said axis and a guide member slideable in said guide face.

The description of embodiments of the present invention is made in conjunction with the accompanying drawings wherein:

Fig. 1 is a plan view of the device;

Fig. 2 is a front view of the cutting device.

Fig. 3 is a partial front view of the internal mechanism of the same;

Fig. 4 is a sectional view taken along line IV—IV of Fig. 2;

Fig. 5 is a front view illustrating a strip of continuous articles being supplied to the cutting device;

Fig. 6 is an exploded perspective view illustrating a detail of the device;

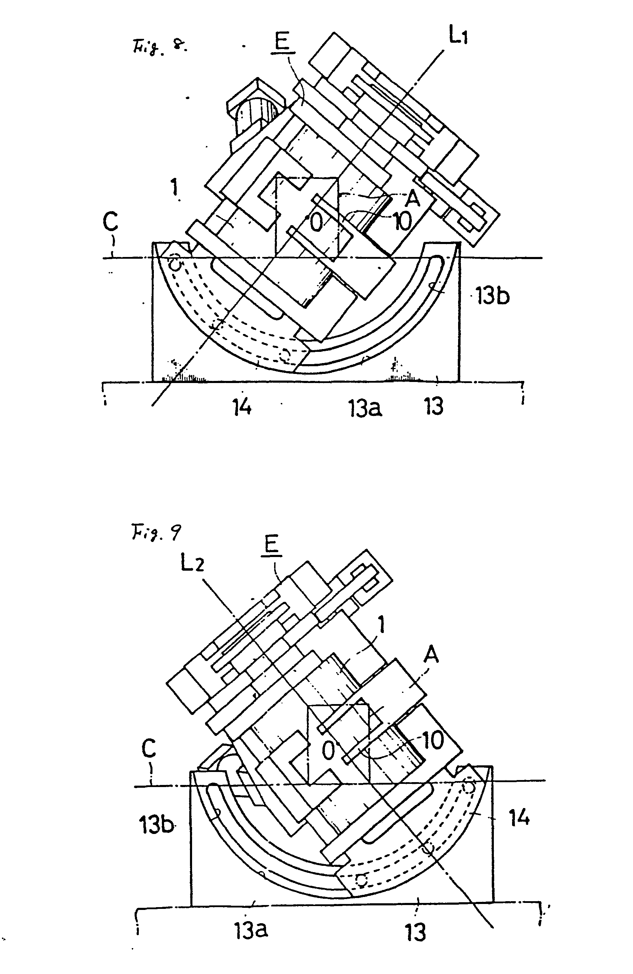

Fig. 7 is a back view of a guide member;

Figs. 8 and 9 are side views of the cutting device in two different angle positions;

Fig. 10 is a side view illustrating a pair of injection nozzles mounted to the device;

Fig. 11 is a side view illustrating two mounting positions, the device according to different size of the commodity;

Fig. 12 is a perspective view of a strip of articles to be packaged such as straws; and

Figs. 13 and 14 are perspective views illustrating the articles adhered to two food packaging containers of different size.

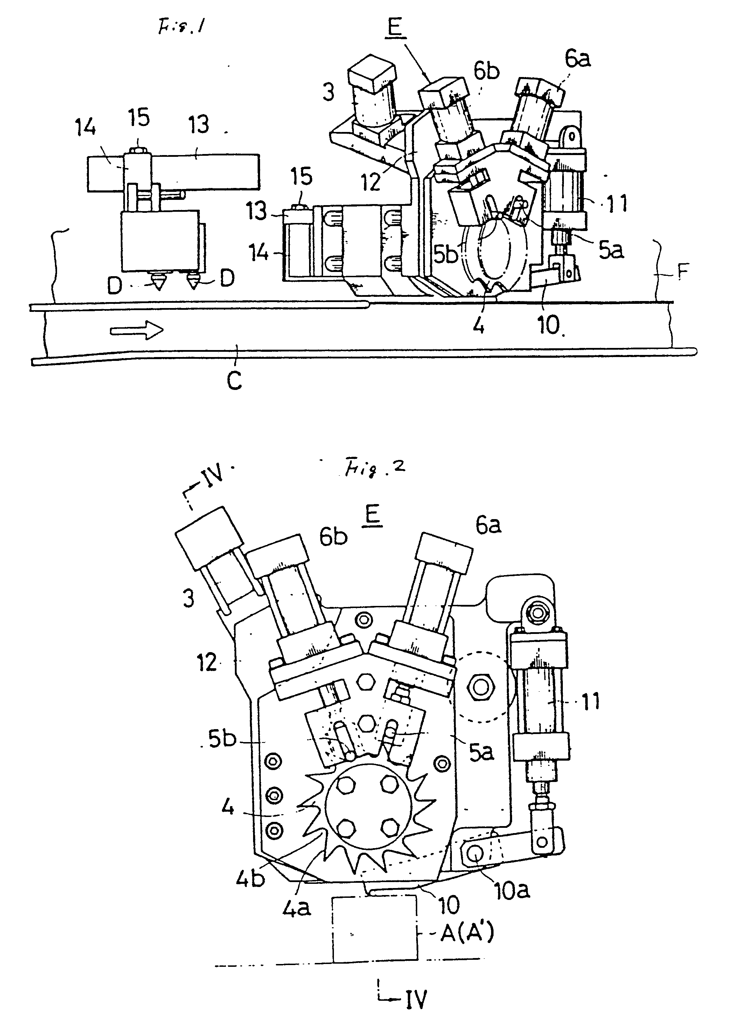

Fig. 1 shows an adhesive applying device having a pair of upper and lower adhesive injection nozzles D, D and a cutting device E arranged one behind the other on the side of conveyance passage C.

As shown in Figs. 2—4, the cutting device E for cutting from a continuous strip the auxiliary articles to be packaged such as straws comprises a cutting drum 1 being intermittently rotated and a cutter 2 capable of entering in slots 1a of the drum.

The intermittent rotation of the cutting drum 1 supplies a continuous strip B of equispaced articles d by steps of predetermined distance by the distance corresponding to the spacing of the articles. At each step of the drum a cylinder 3 moves the cutter 2 into a corresponding slot 1a, thereby cutting the narrow strip of continuous articles to be packaged B into individual package articles b, and, at the same time, the rotation of the cutting drum 1 consecutively feeds out the package articles b. An expanded part d of the strip B enwrapping the auxiliary articles b is fitted in each of feed grooves 1b formed between the slots 1a of the cutting drum 1. Instead of the system wherein the cutter 2 is advanced and retreated by the cylinder, another system may be used wherein when a rotating cutter passes a slot while the drum is revolving.

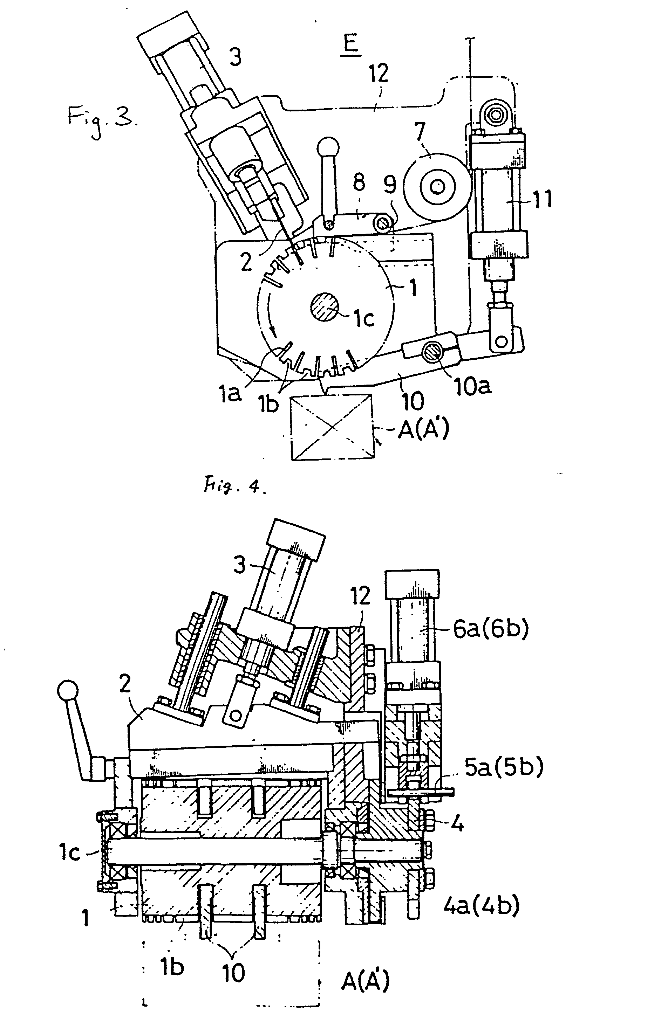

For performing the intermittent rotation of the cutting drum 1, as shown in Figs. 2 and 4, according to the emodiment a cam wheel 4 is fixed concentrically to a shaft 1c of the cutting drum 1 and cooperates alternating with two pins 5a and 5b which are disposed on the outside of the cam wheel 4 and actuated by two cylinders 6a and 6b to enter alternatingly into the recess of grooves 4b having inclined driving side wells 4a. Fig. 2 illustrates the state wherein the pin 5b fully entered in a groove 4b of the cam wheel 4 and, when the cylinder is actuated, said pin 5b moves out of the groove. At the same moment a corresponding actuation of the other cylinder 6a adapts the pin 5a to push the inclined side of another groove 4a of the cam wheel 4. Accordingly, the cam wheel 4 is rotated counterclockwise in Fig. 2 and as soon as the cam wheel 4 has been rotated by one pitch the cylinder 6b commences to be actuated again so that the pin 5b is entered in the next groove 4b, thereby stopping the cam wheel 4. Thus, an alternate actuation of two cylinders 6a and 6b rotates intermittently the cam wheel 4, resulting in the intermittent rotation of the cutting drum 1 which is located on the same shaft as that of the cam wheel 4.

The strip B holding the articles to be packaged is adapted to be fed through a guide roller 7 and a guide surface 9 of an attachment 8 as shown in Fig. 3 to the cutting drum 1.

At a position of the drum 1 opposite to the cutter 2 two levers 10 are provided for taking off the individual package articles b which have been cut by the cutter 2 from the periphery of the cutting drum 1 and pushing them towards the side face of the food packaging containers A and A' which are fed past the side thereof. Said levers 10 are adapted to be swingingly moved with the shaft 10a as a fulcrum by actuation of a cylinder 11.

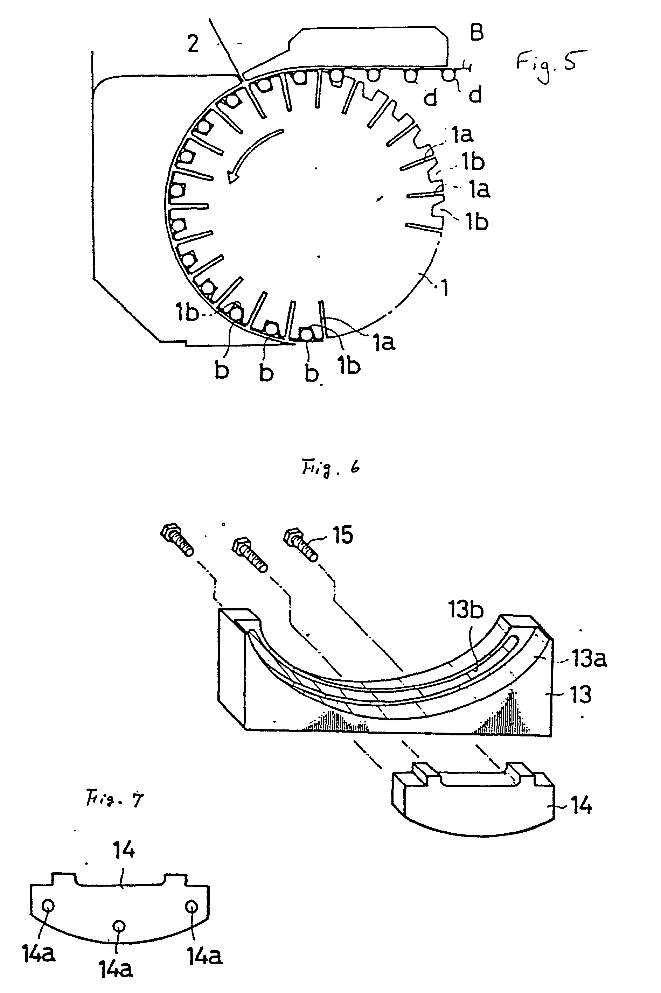

The cutting device E is, as shown in Figs. 2 to 4, formed as one unit which is mounted to a plate 12 disposed on the side of the conveyance passage C as shown in Fig. 1. For mounting cutting device E on the side of the conveyance passage C, a bracket 13 as shown in Fig. 6 is fixed to a frame F located at the side of the conveyance passage C, and a guide member 14 is mounted to said bracket 13 by fastening means 15.

On the bracket 13 a guide section 13a is formed which projects inwardly and is arc-shaped, the arc being concentric to the center (shown by 0 in Figs. 8—10) of the side face of a food packaging container A which is fed through the conveyance passage C (usable as a conveyor). In the embodiment the guide surface 13 is adjacent to a guide slot 13b.

The guide member 14 is fixed to the bracket 13, according to the embodiment such that the fasteners (bolts) 15 are inserted from the back side through the guide slot 13b and are screwed in screw holes 14a provided on the back side of the guide member 14. The lower surface of the guide member 14 is arc-shaped, for fitting with the guide surface 13a formed on the bracket 13. To alter the mounting position on the guide surface 13a of the bracket 13, after loosening the fasteners (bolts) 15, the guide member 14 is moved along the guide surface 13a of the bracket 13 and after reaching the desired position, the fasteners (bolts) 15 are fastened.

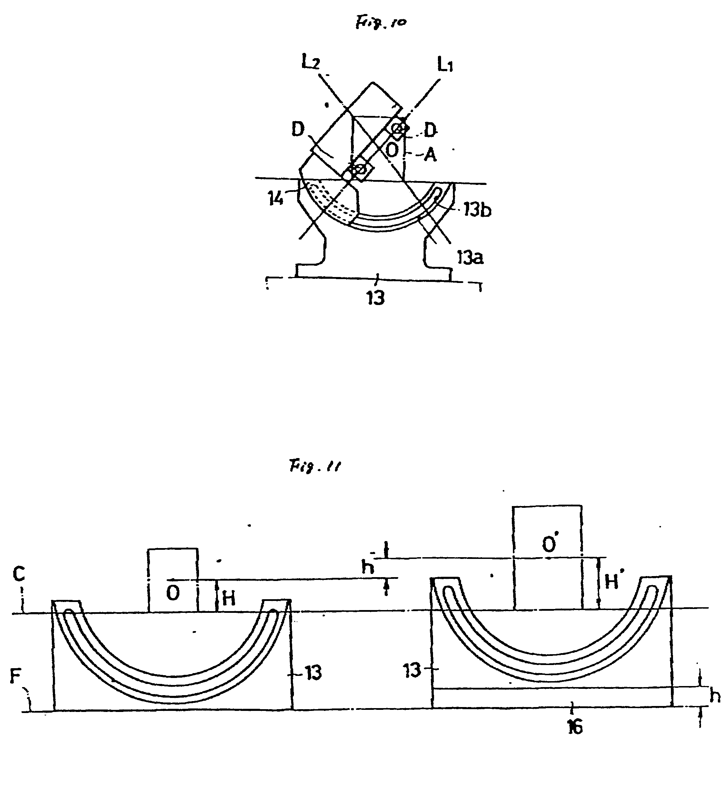

By such an arrangement if the cutting device E is mounted to said guide member 14, its physical angle can be easily altered. Figs. 8 and 9 illustrate the case where the guide member 14 is set to the limit at the left end, at the right end of the bracket 13, respectively the corresponding physical angles of the cutting device E, mounted as a unit to the member to be guided 14, being reversive to each other. In both cases the shaft line of the cutting drum 1 of the cutting device E to be located on the line passing the center O of the side face of the food packaging container A which is fed through the conveyance passage C. In particular, when the guide member 14 is set to each of the positions of Figs. 8 and 9 with regard to the bracket 13, the axis of the cutting drum 1 may come to be located along the diagonals $L_1$ and $L_2$ of the food packaging container A, and the cutting device E will enable the package article b to be adhered at a position where it is in line with the diagonal $L_1$ and $L_2$ of the side face of the food packaging container A.

Referring now to Fig. 10, which illustrates another embodiment of the present invention, in place of the above-mentioned cutting device E, a pair of upper and lower adhesive injection nozzles D, D are shown to be mounted to the guide member 14. In that case, similarly to the case of above-mentioned cutting device E, the pair of adhesive injection nozzles D, D can be positioned on a line passing the center O of the side face of the food packaging container A which is fed through the conveyance passage C and in particular, if the guide member 14 is set to the position shown by a full line of Fig. 10 with respect to the bracket 13 or reversely to the limit at the right end of the bracket 13, the pair of adhesive injection nozzles D, D can be positioned to the diagonals $L_1$ and $L_2$ of the food packaging container A for applying the adhesive to two points on the diagonals $L_1$ and $L_2$. By pressing the article b thereon, it can be adhered in a position where it is just in line with the diagonal of the side face of the food packaging container A.

In the foregoing embodiment, in order to mount smoothly the guide member 14 to the bracket 13, and to ensure it to be concentric with the center O of the side face of the food packaging container A which is fed through the conveyance passage C both the guide surface 13a, internally projected and arc-shaped, and the arc-shaped guide slot 13b, are used in common. If desired, the guide section may use only either of the guide surface 13a or the guide slot 13b. If only the guide surface 13a is formed without provision of the guide slot 13b, it may be necessary to shape the lower surface of the guide member 14 to be internally projected and arc-shaped identically to the form of said guide surface 13a. In that case, since bolts 15 fixing means cannot be inserted into a guide slot 13b of the bracket 13, an alternative method of making a fixture by using a suitable clamp or by screwing bolts from the front face of the guide member 14 into the bracket 13 may be conceived. On the other hand, if only the guide slot 13b is formed without provision of the guide surface 13a, the guide member 14 can be easily mounted to the bracket 13 only by means of the bolts 15 which are inserted from the back of the member 14. In that case it may not be necessary to form the lower surface of the member 14 to be arc-shaped.

Fig. 11 illustrates how to mount the bracket 13 in the case where the size of the food packaging container which is fed through the conveyance passage C is different.

In such case, the distance H from the conveyance passage C to the center O of the small food packaging container A which is conveyed is different from the distance H' from the conveyance passage C to the center O' of a larger food packaging container A' which is conveyed. The bracket 13 used when handling the smaller food packaging container A cannot be utilized for the case where the larger food packaging container A' is handled without modifying the bracket or using another bracket. However, this difficulty can be solved if an auxiliary base 16 possessing a thickness of h (h=H'−H) equal to the difference between H' and H is used as shown in Fig. 11, whereby the bracket used for the small food packaging container A can be used without modifying it. As shown in Fig. 11, the auxiliary base 16 possessing a thickness h is put on the frame F, and the bracket 13 used for the small food packaging container A is mounted thereto.

By such an arrangement the distances from the centers O and O' of two food packaging containers A and A' to the guide section of the bracket 13 become equal to each other, although the distances H and H' from the conveyance passage C to the centers O and O' of these food packaging containers A and A' are different from each other. Therefore, the bracket 13 used for the case where the smaller containers A are handled can be utilized also for the case where the larger containers A' are handled. This offers the convenience that manufacturing of different special brackets is not necessary.

According to the present invention it is possible to alter easily and accurately the physical angle of the device disposed on the side of the conveyance passage with respect to the commodities transferred thereon. In particular, the present invention enables the above-mentioned device to be easily and accurately disposed along a line passing through the center of the side face of the commodity to be transferred.

**Claims**

1. An apparatus for affixing auxiliary articles to the side face of commodities (A) moving along a conveying passage, comprising a glue application device (D), and/or an article cutting and affixing device (E) mounted at the side of the conveying passage (C), said device (D and/or E) being mounted on a support (13, 14) having guide means (13a, 13b) for guiding said device for a tilting movement about an ideal axis which is substantially perpendicular to said side face of the commodities (A) on said conveyor (C), and fastening means (15) for locating said device in a desired angular position about said axis, characterized in that said axis passes substantially through the center (O) of said side face of the commodities (A).

2. An apparatus as claimed in claim 1, wherein said support comprises a bracket (13) having an arcuate guide face (13a) concentric to said axis, and a guide member (14) slideable said guide face.

3. An apparatus as claimed in claim 2, wherein said bracket (13) comprises an arcuate guide slot (13b) concentric to said axis.

4. An apparatus as claimed in claim 2 or 3, wherein an adjustment member (16) is interposed between said bracket (13) and a support frame (7) in order to adjust the center of curvature of said guide surface (13a) with respect to the center (O) of the side face of the commodities (A), the thickness (h) of said adjustment member (16) being selected according to the size of the commodities.

**Patentansprüche**

1. Vorrichtung zum Befestigen von Hilfsartikeln an der Seitenfläche von Werkstücken (A), die sich längs einer Förderpassage bewegen, mit einer Kleberaufbringvorrichtung (D), und/oder einer Artikelschneide- und Befestigungsvorrichtung (E), die auf der Seite der Förderpassage (C) befestigt ist, wobei die Vorrichtung (D) und/oder (E) an einem Träger (13, 14) befestigt ist, der eine Führungsvorrichtung (13a, 13b) aufweist zum Führen der Vorrichtung für eine Kippbewegung um eine Idealachse, welche im wesentlichen senkrecht zur Seitenfläche des Werkstücks (A) auf dem Förderer (C) ist, und mit einer Befestigungsvorrichtung (15) zum Plazieren der Vorrichtung in einer gewünschten Winkelstellung um diese Achse, dadurch gekennzeichnet, daß diese Achse in wesentlichen durch den Mittelpunkt (0) der Seitenfläche der Werkstücke (A) läuft.

2. Vorrichtung nach Anspruch 1, dadurch gekennzeichnet, daß die Trägervorrichtung eine Klammer (13) aufweist, die eine bogenförmige Führungsfläche (13a) aufweist, die konzentrisch zu dieser Achse ist, und ein Führungsteil (14), welches in dieser Führungsfläche gleiten kann.

3. Vorrichtung nach Anspruch 2, dadurch gekennzeichnet, daß die Klammer (13) einen bogenförmigen Führungsschlitz (13b) aufweist, der konzentrisch zur Achse ist.

4. Vorrichtung nach Anspruch 2 oder 3, dadurch gekennzeichnet, daß ein Einstellteil (16) zwischen der Klammer (13) und dem Trägerrahmen (7) angeordnet ist, um das Krümmungszentrum der Führungsfläche (13a) in Bezug auf den Mittelpunkt (0) der Seitenfläche des Werkstückes (A) einzustellen, wobei die Dicke (h) des Einstellteils (16) ausgewählt wird entsprechend den Maßen des werkstückes.

**Revendications**

1. Appareil pour fixer des objets auxiliaires à la face latérale d'articles de consommation (A) se déplaçant le long d'un passage de transport, comprenant un dispositif (D) d'application de colle, et/ou un dispositif (E) de coupe et de fixation d'objet monté sur le côté du passage (C) de transport, ledit dispositif (D et/ou E) étant monté sur un support (13, 14) comportant des moyens de guidage (13a, 13b) destiné à guider ledit dispositif pour un mouvement d'inclinaison autour d'un axe idéal qui est sensiblement perpendiculaire à ladite face latérale des articles de consommation (A) sur ledit transporteur (C), et des moyens de fixation (15) destinés à placer ledit dispositif dans une position angulaire souhaitée autour dudit axe, caractérisé en ce que ledit axe passe sensiblement par le centre (0) de ladite face latérale des articles de consommation (A).

2. Appareil selon la revendication 1, dans lequel ledit support comprend une chaise (13) présentant une surface incurvée (13a) de guidage concentrique audit axe, et un élément de guidage (14) pouvant glisser dans ladite face de guidage.

3. Appareil selon la revendication 2, dans lequel ladite chaise (13) présente une fente incurvée (13b) concentrique audit axe.

4. Appareil selon la revendication 2 ou 3, dans lequel un élément (16) de réglage est interposé entre ladite chaise (13) et un bâti (7) de support afin de régler le centre de courbure de ladite surface (13a) de guidage par rapport au centre (0) de la face latérale des articles de consommation (A), l'épaisseur (h) dudit élément (16) de réglage étant choisie en fonction de la dimension des articles de consommation.

Fig.1

14 15 13

E

3 6b 6a

15
13
14

12

5b

11

5a

4 10

D D

C

F

Fig.2

IV

6b E 6a

3

12

11

5b

5a

4

4b

4a 10 10a

A(A')

IV

Fig. 3.

Fig. 4.

Fig. 5

Fig. 6

Fig. 7

Fig. 8.

Fig. 9

Fig. 10

Fig. 11

Fig 12

Fig 13

A

b

Fig. 14

A'

b

6